# EUROPEAN PATENT APPLICATION

(11) **EP 3 764 138 A1**
(43) Date of publication of application: **13.01.2021**
(21) Application number: 20178941.9
(22) Date of filing: 09.06.2020
(51) Int. Cl.: G02B 6/38

(54) **OPTICAL FIBER FERRULE ASSEMBLY, OPTICAL CONNECTOR, AND METHOD FOR PRODUCING AN OPTICAL FIBER FERRULE ASSEMBLY**

(30) Priority: 11.07.2019 JP 2019129087
(71) Applicant: YAZAKI CORPORATION, Minato-ku, Tokyo 108-8333 (JP)
(72) Inventor: HIKOSAKA, Tomohiro, Makinohara-shi, Shizuoka 421-0407 (JP)
(74) Representative: Grünecker Patent- und Rechtsanwälte PartG mbB

(57) **Abstract**

An optical fiber ferrule assembly is provided which enable preventing the optical fiber from tilting and misalignment with regard to the ferrule. An optical fiber ferrule assembly 1 which forms a part of an optical connector includes an optical fiber 4 and a ferrule 5 made of resin. The optical fiber 4 integrated with the ferrule 5 by embedding an end of the optical fiber 4 into the ferrule 5 via insert molding. A plurality of holes 57 are formed in the ferrule 5, wherein the holes 57 extend from an outer surface of the ferrule 5 to an outer circumferential surface of the optical fiber 4. These holes 57 are formed by disposing a plurality of pins 7 for positioning the optical fiber into a mold for the ferrule 5.

## Description

### BACKGROUND OF THE INVENTION

### Technical Field

The present invention relates to an optical fiber ferrule assembly including an optical fiber and a ferrule integrated with an end of the optical fiber, an optical connector with the optical fiber ferrule assembly, and a method for producing an optical fiber ferrule assembly.

### Background Art

Conventionally, an optical connector is known which includes an optical fiber, a ferrule attached to an end of the optical fiber, a housing for the ferrule, and a holder incorporated in the housing, the holder being configured to prevent the ferrule from removal (see e.g. Patent Document 1). In the present specification, the term "optical fiber ferrule assembly" shall refer to an optical fiber with a ferrule integrated with an end of the optical fiber.

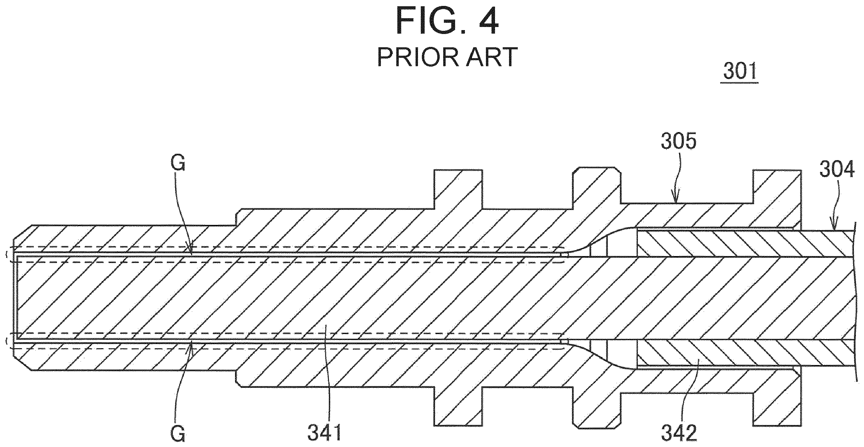

Fig.4 shows a cross-section of a conventional optical fiber ferrule assembly. The optical fiber ferrule assembly 301 is formed by inserting an end of an optical fiber 304 into a cylindrical ferrule 305 and by firmly coupling both of them via laser welding, adhesion etc.

The optical fiber 304 is formed from a bare fiber 341 made of quartz, plastics etc. which is covered with a coating 342 made of resin, wherein the coating 342 is removed in advance from the optical fiber 304 at an end which is to be inserted into the ferrule 305.

### Citation List

### Patent Literature

Patent Document 1: JP 2014-44335 A

### SUMMARY OF THE INVENTION

For the optical fiber ferrule assembly 301 as mentioned above, since the optical fiber 304 and the ferrule 305 are separated components and there is a clearance between these components (indicated with the reference sign G in Fig.4), there is a problem that the optical fiber 304 may be coupled to the ferrule 305 with the optical fiber 304 being tilted or misaligned. In this case, an axis or an end face of the optical fiber 304 is offset, which is undesirable since this may result in a reduced telecommunication reliability between optical connectors.

In order to solve the above-mentioned problem, an objective of the present invention is to provide an optical fiber ferrule assembly, an optical connector including the optical fiber ferrule assembly, and a method for producing an optical fiber ferrule assembly which enable preventing the optical fiber from tilting and misalignment with regard to the ferrule.

An optical fiber ferrule assembly according to the present invention includes an optical fiber, and a ferrule made of resin, wherein the optical fiber is integrated with the ferrule by embedding an end of the optical fiber into the ferrule via insert molding.

An optical connector according to the present invention includes the optical fiber ferrule assembly, a housing for accommodating an end of the optical fiber ferrule assembly, and a holder incorporated in the housing, the holder being configured to prevent the optical fiber ferrule assembly from removal.

A method for producing an optical fiber ferrule assembly according to the present invention includes disposing an end of an optical fiber within a mold for a ferrule, and filling the mold with resin to form the ferrule via insert molding and simultaneously integrate the ferrule with the optical fiber.

The present invention can enable preventing the optical fiber from tilting and misalignment with regard to the ferrule, since there is no clearance between the optical fiber and the ferrule. This can enable preventing a reduction of the telecommunication reliability between an optical connector equipped with the optical fiber ferrule assembly and a partner connector.

### BRIEF DESCRIPTION OF THE DRAWINGS

Fig.1. shows an exploded view of an optical connector with optical fiber ferrule assemblies according to an embodiment of the present invention;
Fig.2. shows a cross sectional view of an optical fiber ferrule assembly according to Fig.1;
Fig.3. shows an explanation view for illustrating a method for producing the optical fiber ferrule assembly according to Fig.1; and
Fig.4. shows a cross section of a conventional optical fiber ferrule assembly.

### DETAILED DESCRIPTION OF THE PREFERRED EMBODIMENTS

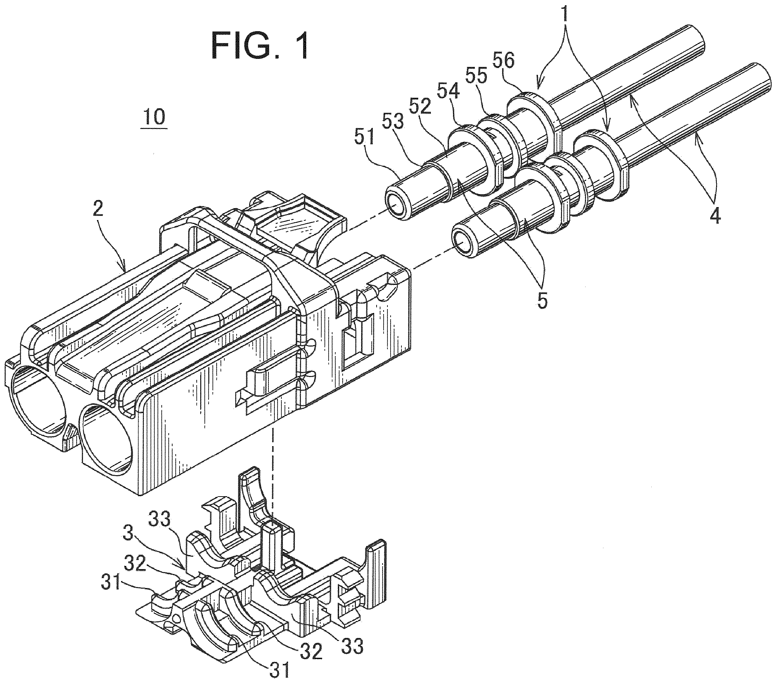

An "optical fiber ferrule assembly", an "optical connector" and a "method for producing an optical fiber ferrule assembly" according to particular embodiments of the present invention shall be described with reference to Figs.1 to 3.

An optical connector 10 as shown in Fig.1 includes a pair of optical fiber ferrule assemblies 1, a housing 2 for accommodating ends of these optical fiber ferrule assemblies 1, and a holder 3 to be incorporated into the housing 2, the holder 3 being configured for preventing the optical fiber ferrule assemblies 1 from removal.

Each of the optical fiber ferrule assemblies 1 includes an optical fiber 4 and a ferrule 5 made of resin.

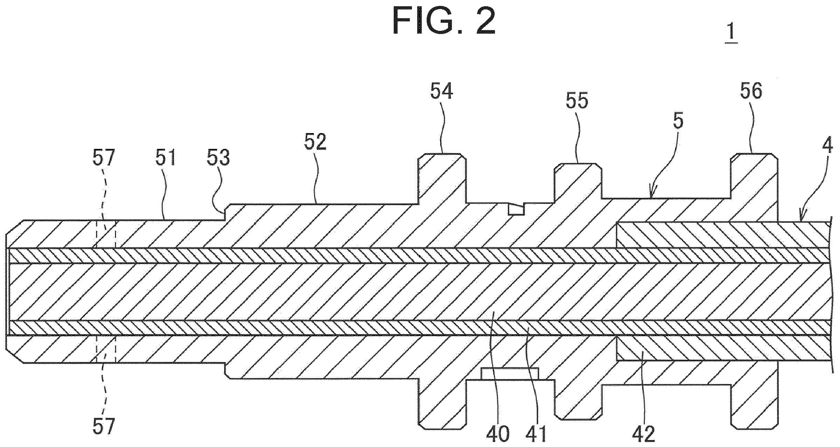

As shown in Fig.2, each of the optical fibers 4 is formed from a bare fiber 40, a primary coating 41 covering the bare fiber 40, and an outermost secondary coating 42, wherein the bare fiber 40 is formed from a core and a cladding. The optical fiber 4 is integrated with the ferrule 5 by embedding an end of the optical fiber 4 into the ferrule 5 via insert molding. Further, the secondary coating 42 is removed at the end of the optical fiber 4 embedded into the ferrule 5.

The ferrule 5 is molded in an outer circumference of the optical fiber 4 without clearances except for a region of holes 57 described later, wherein the ferrule 5 has a small diameter section 51 with a cylindrical shape located closer to an end face of the optical fiber 4, a large diameter section 52 with a cylindrical shape having a larger diameter than the small diameter section 51, and annular overhangs 54, 55, 56 in an integrated manner, the overhangs 54, 55, 56 overhanging from an outer circumferential surface of the large diameter section 52.

A step 53 is formed at a transition between the small diameter section 51 and the large diameter section 52. Further, a plurality of holes 57 are formed in the small diameter section 51, wherein the holes 57 extend from an outer surface of the small diameter section 51 to an outer circumferential surface of the optical fiber 4 (an outer circumferential surface of the primary coating 41). These holes 57 are formed by disposing a plurality of pins 7 for positioning the optical fiber into a mold 6 for the ferrule 5.

The housing 2 consists of resin. The housing 2 is configured to be fitted to a housing for a partner connector which is not shown. In the fitting process, the step 53 comes into contact with the housing for the partner connector which is not shown.

The holder 3 consists of resin. The holder 3 includes ribs 31 to be positioned between the overhangs 54 and 55, ribs 32 to be positioned between the overhangs 55 and 56, and engagement ribs 33 to engage with the overhangs 56, wherein the engagement ribs 33 allow preventing that the optical fiber ferrule assemblies 1 is removed out of the housing 2.

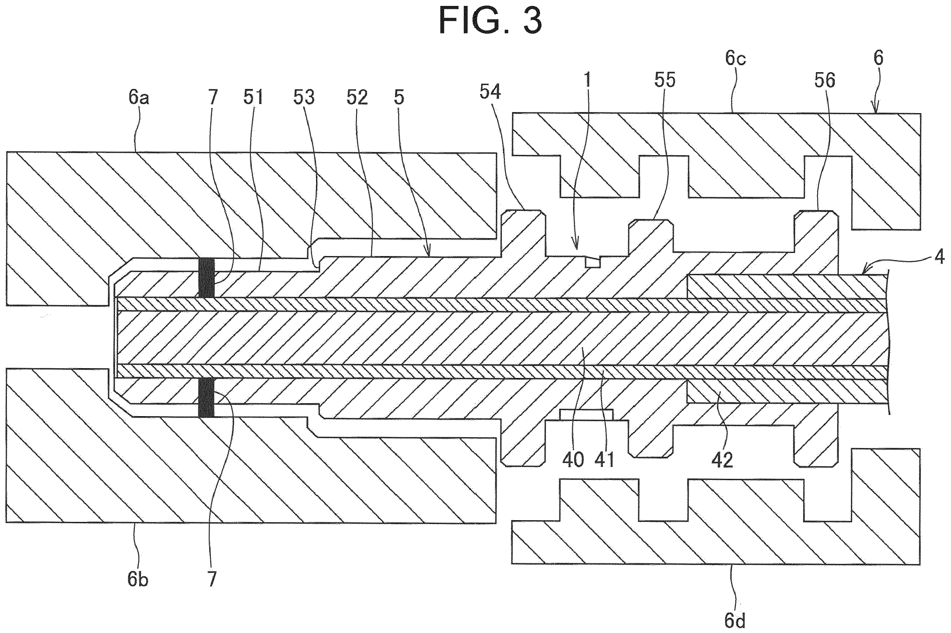

Next, a method for producing the optical fiber ferrule assembly 1 as described above shall be described with reference to Fig.3. A mold 6 for the ferrule 5 as shown in Fig.3 is formed from a plurality of separated molds 6a, 6b, 6c and 6d etc. A plurality of pins 7 for positioning the optical fiber protrude into an internal spaces (cavities) of the separated molds 6a and 6b for molding the small diameter section 51.

First, the secondary coating 42 is removed at an end of the optical fiber 4. Then, the end of the optical fiber 4 is disposed into the mold 6. At this time, the end of the optical fiber 4 is positioned accurately with the plurality of pins 7 by closing the separated molds 6a and 6b together. Next, the closed mold 6 is filled with a molten resin, which is cooled to be cured. In this manner, the ferrule 5 is molded via insert molding, and simultaneously, the ferrule 5 and the optical fiber 4 are integrated with each other. Finally, the mold 6 is opened to remove a molded product. Through the above-described steps, the optical fiber ferrule assembly 1 is obtained.

The optical fiber ferrule assembly 1 produced with the above-described method has no clearance between the optical fiber 4 and the ferrule 5, which can enable preventing the optical fiber 4 from tilting and misalignment with regard to the ferrule 5. Furthermore, for the optical fiber ferrule assembly 1 according to the present example, accurate positioning is achieved with the plurality of pins 7 during insert molding, so that the optical fiber 4 is positioned relative to the ferrule 5 with high precision. This can enable preventing a reduction of the telecommunication reliability between the optical connector 10 equipped with the optical fiber ferrule assembly 1 and a partner connector.

Additionally, for the optical fiber ferrule assembly 1 as described above, the optical fiber 4 is integrated with the ferrule 5 by embedding an end of the optical fiber 4 into the ferrule 5 during the insert molding, which can enable firm fixture with higher certainty than laser welding and adhesion with an adhesive according to conventional examples. Moreover, the optical fiber ferrule assembly 1 as described above does not requires any clearances between the optical fiber 4 and the ferrule 5, which enables a more compact design.

It is to be noted that the embodiments as described above merely illustrate representative examples for the present invention, and the present invention is not limited to these embodiments. I.e., various modifications may be performed without departing from the core of the present invention. It is obvious that such modifications are included in the scope of the present invention as far as the modifications comprise the features of the present invention.

### Reference Signs List

- 1: Optical fiber ferrule assembly
- 2: Housing
- 3: Holder
- 4: Optical fiber
- 5: Ferrule
- 6: Mold
- 7: Pin
- 10: Optical connector
- 57: Hole

## Claims

1. An optical fiber ferrule assembly comprising:
an optical fiber; and
a ferrule made of resin,
wherein the optical fiber is integrated with the ferrule by embedding an end of the optical fiber into the ferrule via insert molding.

2. The optical fiber ferrule assembly according to claim 1,
wherein a hole is formed in the ferrule, wherein the hole extends from an outer surface of the ferrule to an outer circumferential surface of the optical fiber, and
wherein the hole is formed by disposing a pin for positioning the optical fiber into a mold for the ferrule.

3. An optical connector comprising:
the optical fiber ferrule assembly according to claim 1 or 2; and
a housing for accommodating an end of the optical fiber ferrule assembly; and
a holder incorporated in the housing, the holder being configured to prevent the optical fiber ferrule assembly from removal.

4. A method for producing an optical fiber ferrule assembly comprising:
disposing an end of an optical fiber within a mold for a ferrule; and
filling the mold with resin to form the ferrule via insert molding and simultaneously integrate the ferrule with the optical fiber.

5. The method according to claim 4, comprising:
positioning a positioning pin into the mold to position the optical fiber; and
in this condition, filling the mold with the resin and curing the resin.
